# EUROPÄISCHE PATENTSCHRIFT

(11) **EP 1 245 645 B1**
(45) Veröffentlichungstag und Bekanntmachung des Hinweises auf die Patenterteilung: **03.05.2006**
(21) Anmeldenummer: 02005372.4
(22) Anmeldetag: 15.03.2002
(51) Int. Cl.: C09B 67/48, C09B 57/12, C09B 67/22

(54) **Kristallmodifikation eines Perinonfarbstoffes**
Crystal modification of a perinone dye
Modification cristalline d'un colorant périnonique

(30) Priorität: 29.03.2001 DE 10115404
(43) Veröffentlichungstag der Anmeldung: 02.10.2002
(73) Patentinhaber: LANXESS Deutschland GmbH, 51369 Leverkusen (DE)
(72) Erfinder: Michaelis, Stephan, Dr., 51519 Odenthal (DE); Stawitz, Josef-Walter, Dr., 51519 Odenthal (DE)

(56) Entgegenhaltungen:
- EP-A- 0 488 933
- EP-A- 0 780 444
- FR-A- 1 430 705
- US-A- 2 805 957
- US-A- 2 994 697
- DATABASE WPI Section Ch, Week 197709 Derwent Publications Ltd., London, GB; Class A17, AN 1977-15250Y XP002256722 & JP 52 005841 A (DAINICHISEIKA COLOR & CHEM MFG), 17. Januar 1977 (1977-01-17)

## Beschreibung

Die Erfindung betrifft eine neue Kristallmodifikation eines Perinonfarbstoffes der Formel (I), ein Verfahren zu seiner Herstellung sowie seine Verwendung zum Massefärben von Kunststoffen.

JP-A-52005841 offenbart die Überführung eines Pigmentes der Formel 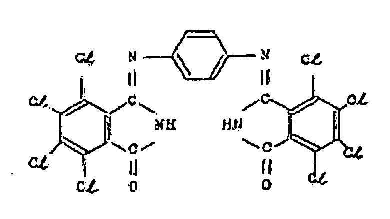 von der alpha- in die beta-Form durch Erwärmen der alpha-Form unter Rühren in Gegenwart einer aromatischen Carbonsäure in der Wärme. US-A-2805957 offenbart die Herstellung von substituierten Kupfer-Phthalocyanin-Verbindungen.

US-A-2994697 offenbart Verbindungen der Formel:

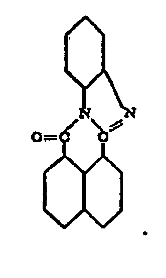

### Der Farbstoff der Formel (I)

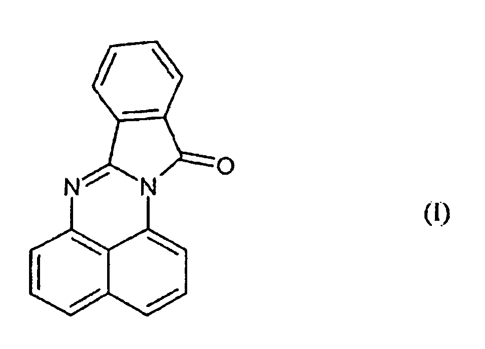

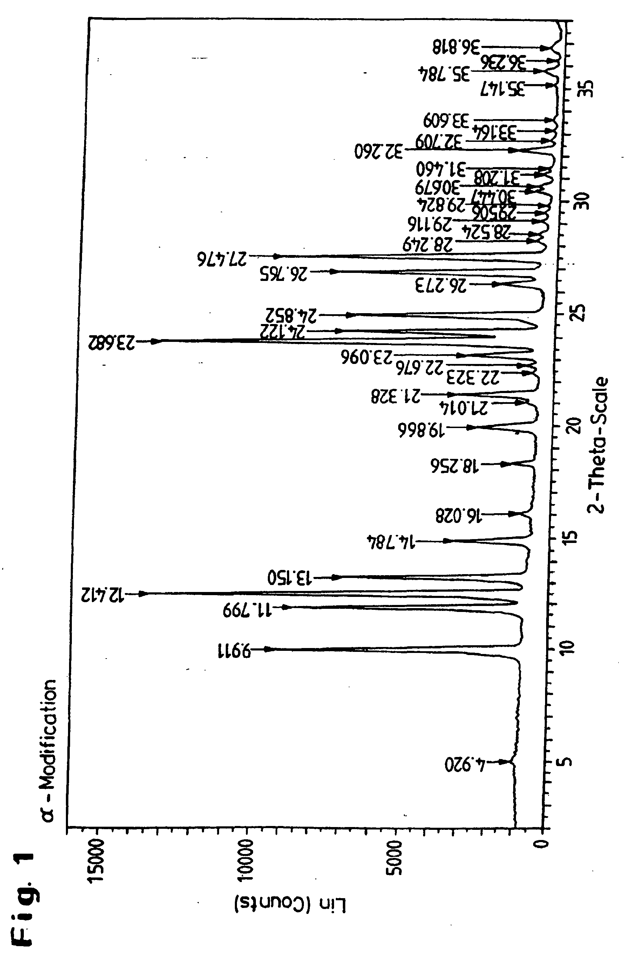

(≙ C.I. Solvent Orange 60), wie er im Stand der Technik beispielsweise in EP-A-780 444 oder in B.K. Manukian Helv. Chimica Acta 1965, Vol. 48, S. 1999-2004 hergestellt wird, besitzt die α-Modifikation, deren Röntgenbeugungsdiagramm (Cu-K_{α}-Strahlung) in Fig. 1 wiedergegeben ist und charakterisiert ist durch Linien bei folgenden Beugungswinkeln 2θ (°):
9,911; 11,799; 12,412; 13,150; 23,682; 24,122; 24,852; 26,765; 27,476.

Der Farbstoff der Formel (I) in der bekannten α-Modifikation ist ein oft eingesetzter und coloristisch wertvoller Farbstoff zum Massefärben von Kunststoffen sowie anderen Anwendungen. Es gibt allerdings eine Reihe von Nachteilen, die es zu verbessern galt. So weist der bekannte Farbstoff als Pulver ein nur geringes Schüttgewicht auf und zeigt beim Handling eine unerwünschte Staubbelastung. Außerdem ist die Herstellung eines Granulats oder Pulvers durch Sprühtrocknung eines wässrigen Slurries wegen eines zu geringen Feststoffanteils im Slurry nicht wirtschaftlich.

Aufgabe der vorliegenden Erfindung war es daher, die bekannten Nachteile des Farbstoffes der Formel (I) zu beheben.

Es wurde eine neue Kristallmodifikation (β-Modifikation) des Farbstoffes der Formel (I) gefunden, die im Röntgenbeugungsdiagramm (Cu-K_{α}-Strahlung) Linien bei folgenden Beugungswinkeln 2θ (°) aufweist:
9,935; 12,734; 13, 378; 24,033; 24,852; 27,455.

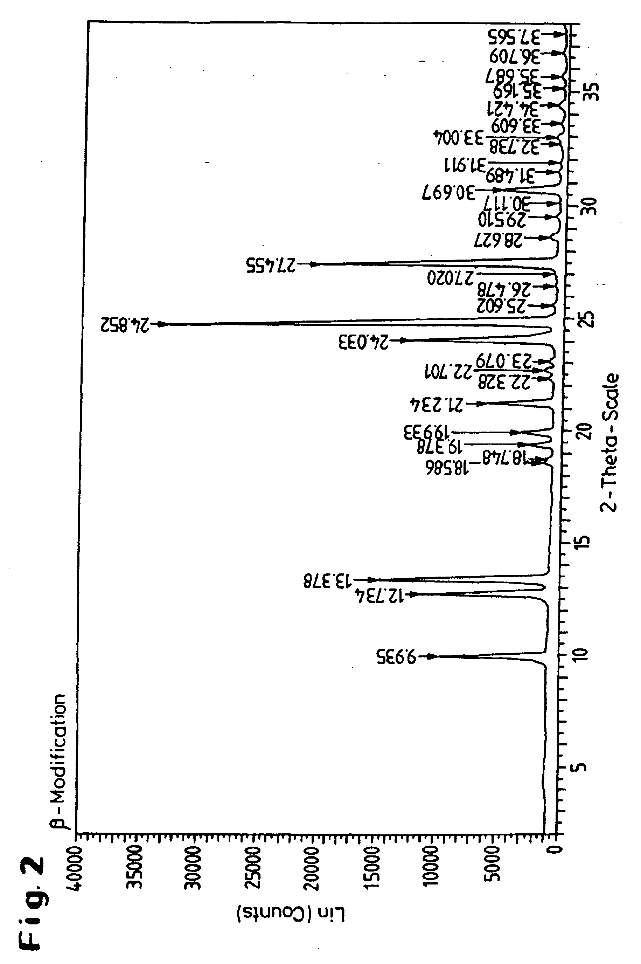

Das mit Cu-K_{α}-Strahlung aufgenommene Röntgenbeugungsdiagramm der α-Modifikation ist in Fig. 1 und das der β-Modifikation in Fig. 2 dargestellt. Zur Aufnahme wurde ein rechnergesteuertes STOE STADI-β Pulverdifraktometer benutzt.

Die erfindungsgemäße β-Modifikation kann beispielsweise so hergestellt werden, dass man Phthalsäureanhydrid und 1,8-Diaminonaphthalin in einem organischen Lösungsmittel in Gegenwart von Trimellithsäure oder deren Derivaten bei einer Temperatur von 90 bis 200°C umsetzt.

Als Trimellithsäurederivate kommen beispielsweise -anhydride, -ester, -salze oder auch Verbindungen der Formel (II) in Frage 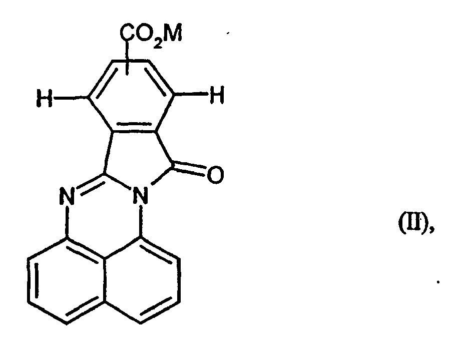 worin
M = H, Alkali oder Erdalkali.

Bevorzugt verwendet man 0,9 bis 1,4, insbesondere 1,05 bis 1,25 Mol-Äquivalente Phthalsäureanhydrid, bezogen auf 1 Mol 1,8-Diaminonaphthalin.

Die Menge an Trimellithsäure oder -Derivat beträgt vorzugsweise 0,005 bis 0,1, insbesondere 0,02 bis 0,05 Mol-Äquivalente, bezogen auf 1 Mol 1,8-Diaminonaphthalin.

Als organische Lösungsmittel kommen vorzugsweise in Frage: N-Methylpyrrolidon, Phenol, Dichlorbenzol, Nitrobenzol, Chlorbenzol und/oder Glykol, insbesondere N-Methylpyrrolidon.

Die Umsetzung erfolgt vorzugsweise bei einer Temperatur von 100 bis 160°C.

Zur Beschleunigung der Kondensationsreaktion werden zusätzlich Säuren zur Trimellithsäure wie Mineralsäuren bzw. Salzsäure, Schwefelsäure oder Phosphorsäure eingesetzt, bevorzugt aber von Trimellithsäure verschiedene organische Säuren eingesetzt, beispielsweise aliphatische oder aromatische Carbonsäuren oder Sulfonsäuren, wie Taurin oder Toluolsulfonsäure.

Derartige Reaktionsbeschleuniger werden vorzugsweise in einer Menge von 0,001 bis 1, insbesondere 0,01 bis 0,2 Mol-Äquivalente, bezogen auf 1,8-Diaminonaphthalin eingesetzt.

Die Erfindung betrifft ebenfalls das nach dem erfindungsgemäßen Verfahren erhältliche Produkt, dessen Röntgenbeugungsdiagramm Linien bei denselben Beugungswinkeln aufweist, wie sie für die β-Modifikation angegeben sind.

In einer bevorzugten Ausführungsform des erfindungsgemäßen Verfahrens geht man so vor, dass man zu einer Lösung oder Suspension von Phthalsäureanhydrid und Trimellithsäure oder -derivat in einem organischen Lösungsmittel 1,8-Diaminonaphthalin bei Reaktionstemperatur zudosiert. Das 1,8-Diaminonaphthalin kann dabei in gelöster Form, beispielsweise in einem organischen Lösungsmittel wie N-Methyl-pyrrolidon, in geschmolzener oder fester Form zugegeben werden.

Die Erfindung betrifft weiterhin ein Verfahren zur Herstellung des Farbstoffes der Formel (I) in der β-Modifikation, das dadurch gekennzeichnet ist, dass man den Farbstoff der Formel (I) in der α-Modifikation wie sie oben beschrieben ist, in einem organischen Lösungsmittel beispielsweise in einen der oben angegebenen Lösungsmittel, insbesondere in N-Methylpyrrolidon, vorzugsweise bei einer Temperatur von 80 bis 160°C löst und den Farbstoff der Formel (I) in Gegenwart von Trimellithsäure oder deren Derivate ausfällt, bevorzugt in Gegenwart einer Verbindung der Formel II.

Die Erfindung betrifft weiterhin eine wässrige Dispersion enthaltend 20 bis 50 Gew.-% des Farbstoffes der Formel I in der β-Modifikation und 0,1 bis 5 Gew.-% eines Dispergators, bezogen auf den in der Dispersion enthaltenen Farbstoff.

Als Dispergator kommen insbesondere die in EP-A 488 933 offenbarten Polyglykole in Frage.

In einer bevorzugten Ausführungsform hat das Polyglykol ein Molekulargewicht von 900-15.000, insbesondere 5.000-8.000 g/mol, berechnet aus der OH-Zahl. In einer weiteren bevorzugten Ausführungsform ist das Polyglykol ein Copolymerisat aus Propylenoxid und Ethylenoxid. In einer weiteren bevorzugten Ausführungsform ist das Polyglykol ein Copolymerisat aus Propylenoxid und Ethylenoxid mit einer mittleren molaren Masse, berechnet aus der OH-Zahl, von 2.000 bis 10.000 g/mol. In einer weiteren bevorzugten Ausführungsform beträgt die Menge des Polyglykols, bezogen auf den Trockenfarbstoff, 1-3 Gew.-%.

Der Vorteil der erfindungsgemäßen wässrigen Dispersion liegt in der Einstellung eines höheren Farbstoffgehaltes gegenüber einer entsprechenden Dispersion enthaltend den Farbstoff der Formel I in der α-Modifikation.

Die wässrige Dispersion kann dann sprühgetrocknet werden, wobei vorzugsweise die in EP-A-488 933 genannten Sprühtrocknungsbedingungen gelten.

Die Erfindung betrifft daher auch eine feste Präparation, enthaltend 95 bis 99,9 Gew.-% Farbstoff der Formel I in der β-Modifikation und 0,1 bis 5 Gew.-% eines Dispergators, bezogen auf den Farbstoff.

Als bevorzugter Dispergator kommen die oben angegebenen Polyole in Frage.

Die erfindungsgemäßen festen Präparationen werden vorzugsweise durch Sprühtrocknen der erfindungsgemäßen wässrigen Dispersion erhalten.

Bevorzugt enthält die erfindungsgemäße feste Präparation 95 bis 99,9 Gew.-% Farbstoff der Formel I in der β-Modifikation und 0,1 bis 5 Gew.-% eines Dispergators, wobei die Summe aus Farbstoff der Formel I in der β-Modifikation und Dispergator, bezogen auf die feste Präparation, > 96 Gew.-%, vorzugsweise > 97, insbesondere > 99 Gew.-% beträgt.

Bevorzugt liegt die feste Präparation als Pulver oder Granulat vor.

Der erfindungsgemäße Farbstoff der Formel (I) in der β-Modifikation eignet sich hervorragend zum Färben von Kunststoffen in der Masse. Dabei ergibt der Farbstoff der Formel (Ia) orange Färbungen.

Unter Massefärben werden hierbei insbesondere Verfahren verstanden, bei denen der Farbstoff in die geschmolzene Kunststoffmasse eingearbeitet wird, z.B. unter Zuhilfenahme eines Extruders, oder bei denen der Farbstoff bereits Ausgangskomponenten zur Herstellung des Kunststoffes, z.B. Monomeren vor der Polymerisation, zugesetzt wird.

Besonders bevorzugte Kunststoffe sind Thermoplaste, beispielsweise Vinylpolymere, Polyester, Polyamide sowie Polyolefine, insbesondere Polyethylen und Polypropylen, oder Polycarbonate.

Geeignete Vinylpolymere sind Polystyrol, Styrol-Acrylnitril-Copolymere, Styrol-Butadien-Copolymere, Styrol-Butadien-Acrylnitril-Terpolymere, Polymethacrylat, Polyvinylchlorid u.a.

Weiterhin geeignet sind Polyester wie beispielsweise Polyethylenterephthalate, Polycarbonate und Celluloseester.

Bevorzugt sind Polystyrol, Styrol-Mischpolymere, Polycarbonate, Polymethacrylate und Polyamide. Besonders bevorzugt ist Polystyrol, Polyethylen und Polypropylen.

Die erwähnten hochmolekularen Verbindungen können einzeln oder in Gemischen, als plastische Massen oder Schmelzen vorliegen.

Die erfindungsgemäßen Farbstoffe werden vorzugsweise in feinverteilter Form zur Anwendung gebracht, wobei Dispergiermittel mitverwendet werden können aber nicht müssen.

Wird der Farbstoff (I) in der β-Modifikation nach der Polymerisation eingesetzt, so wird er vorzugsweise mit dem Kunststoffgranulat trocken vermischt oder vermahlen und dieses Gemisch z.B. auf Mischwalzen oder in Schnecken plastifiziert und homogenisiert. Man kann die Farbstoffe aber auch der schmelzflüssigen Masse zugeben und diese durch Rühren homogen verteilen. Das derart vorgefärbte Material wird dann wie üblich z.B. durch Verspinnen zu Borsten, Fäden usw. oder durch Extrusion oder im Spritzguss-Verfahren zu Formteilen weiterverarbeitet.

Da der Farbstoff der Formel (I) gegenüber Polymerisationskatalysatoren, insbesondere Peroxiden, beständig ist, ist es auch möglich, den Farbstoff den monomeren Ausgangsmaterialien für die Kunststoffe zuzusetzen und dann in Gegenwart von Polymerisationskatalysatoren zu polymerisieren. Dazu wird der Farbstoff vorzugsweise in den monomeren Komponenten gelöst oder mit ihnen innig vermischt.

Der Farbstoff der Formel (I) in der β-Modifikation wird vorzugsweise zum Färben der genannten Polymeren in Mengen von 0,0001 bis 1 Gew.-%, insbesondere 0,01 bis 0,5 Gew.-%, bezogen auf die Polymermenge, eingesetzt.

Durch Zusatz von in den Polymeren unlöslichen Pigmenten, wie z.B. Titandioxid, können entsprechende wertvolle gedeckte Färbungen erhalten werden.

Titandioxid kann in einer Menge von 0,01 bis 10 Gew.-%, vorzugsweise 0,1 bis 5 Gew.-%, bezogen auf die Polymermenge, verwendet werden.

Nach dem erfindungsgemäßen Verfahren erhält man transparente bzw. gedeckte brillante orange Färbungen mit guter Hitzebeständigkeit sowie guter Licht-, Wetter- und Sublimierechtheit.

In das erfindungsgemäße Verfahren können auch Mischungen des Farbstoffs der Formel (I) mit anderen Farbstoffen und/oder anorganischen bzw. organischen Pigmenten eingesetzt werden.

Die Erfindung wird erläutert, jedoch nicht beschränkt durch die folgenden Beispiele, in denen die Teile gewichtsmäßig angegeben sind, Prozentangaben Gewichtsprozente (Gew.-%) bedeuten.

### Vergleichsbeispiel 1

Der Farbstoff der Formel (I) wurde analog der Verfahrensweise gemäß Beispiel 1 aus EP-A 780 444 hergestellt. Der so erhaltene Farbstoff liegt in der α-Modifikation vor und weist das Röntgenbeugungsdiagramm gemäß Fig. 1 auf.

### Vergleichsbeispiel 2

Analog B.K. Manukian, Helvetica Chimica Acta, S. 2002, Verb. II, wurde der Farbstoff der Formel (I) hergestellt. Der so erhaltene Farbstoff liegt ebenfalls in der α-Modifikation vor und weist das Röntgenbeugungsdiagramm gemäß Fig. 1 auf.

### Beispiel 1

Zu einer Mischung aus 340 Teilen N-Methylpyrrolidon, 6 Teilen Toluolsulfonsäure, 3 Teilen Trimellithsäureanhydrid und 100 Teilen Phthalsäureanhydrid wird über einen Zeitraum von 4 Stunden bei 145°C eine Lösung aus 110 Teilen N-Methyl-pyrrolidon und 89 Teilen 1,8-Diaminonaphthalin zugetropft.

Es wird 2 Stunden bei dieser Temperatur nachgerührt, auf Raumtemperatur abgekühlt und abgesaugt. Anschließend wird mit 125 Teilen N-Methylpyrrolidon und 500 Teilen heißem Wasser gewaschen und bei 80°C im Vakuum getrocknet.

Man erhält 133 Teile des Farbstoffes der Formel (I) in der β-Modifikation mit der in Fig. 2 beschriebenen Kristallmodifikation.

### Beispiel 2

Zu einer Mischung aus 340 Teilen N-Methylpyrrolidon (NMP), 6 Teilen Toluolsulfonsäure und 100 Teilen Phthalsäureanhydrid wird über einen Zeitraum von 4 Stunden bei 145°C eine Lösung aus 110 Teilen N-Methyl-pyrrolidon und 89 Teilen 1,8-Diaminonaphthalin zugetropft.

Es wird 2 Stunden bei dieser Temperatur nachgerührt, auf Raumtemperatur abgekühlt und abgesaugt. Anschließend wird mit 125 Teilen N-Methylpyrrolidon und 500 Teilen heißem Wasser gewaschen und bei 80°C im Vakuum getrocknet.

Man erhält 132 Teile des Farbstoffes der Formel (I) in der α-Modifikation mit der in Fig. 1 beschriebenen Kristallmodifikation.

### Beispiel 3

In 350 Teile NMP werden 130 Teile Farbstoff der Formel I in der α-Modifikation (nach Vergleichsbeispiel 1 hergestellt) und 4 Teile des Kondensationsprodukts aus Trimellithsäure und 1,8-Diaminonaphthalin (Formel II) eingetragen und auf 145°C erhitzt. Es wird dann in 5 Stunden auf 20°C abgekühlt, 1 Stunde bei 20°C nachgerührt und filtriert. Der Filterkuchen wird mit 100 Teilen Methanol, dann mit 500 Teilen Wasser gewaschen. Nach Trocknen i.Vak. bei 80°C erhält man 124,6 Teile des Farbstoffs der Formel I in der β-Modifikation mit der in Fig. 2 beschriebenen Kristallmodifikation.

### Eigenschaftsprofile

Ein Vergleich der Eigenschaften des Farbstoffes der Formel (I) in der α-Modifikation nach Vergleichsbeispiel 1 oder 2 und der β-Modifikation gemäß einem der Beispiele 1 oder 3 zeigt folgendes Bild.

| | α-Modifikation | β-Modifikation |
|---|---|---|
| Schüttdichte in g/cm³ | 0,16 | 0,29 |
| Filtration bei der Isolierung des Farbstoffes aus der Reaktionsmischung | gut | sehr gut (auch ohne Anlegen von Vakuum) |
| Feststoffgehalt eines wässrigen Slurries mit 2 Gew.-%, bezogen auf den Slurry eines EO/PO-Blockpolyetherpolyols (Pluronic®) als Emulgator | 14 bis 20 Gew.% | 38 bis 45 Gew.-% |

Außerdem kann in einem definierten Reaktionsgefäß im technischen Ansatz die α-Modifikation lediglich in geringerer Menge hergestellt werden als die β-Modifikation, da bei der α-Modifikation sehr schnell Rührprobleme auftreten. Dies ist bei der β-Modifikation nicht der Fall. Somit lässt die β-Modifikation auch eine höhere Raum-Zeit-Ausbeute zu.

## Patentansprüche

1. Farbstoff der Formel (I) in der β-Modifikation 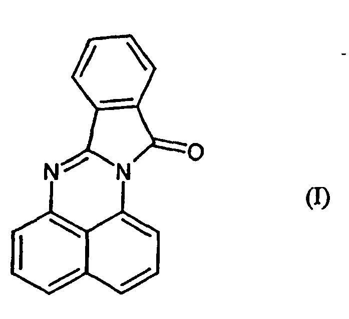 die im Röntgenbeugungsdiagramm (Cu-K_{α}-Strahlung) Linien bei folgenden Beugungswinkeln 2θ (°) aufweist:
9,935; 12,734; 13,378; 24,033; 24,852; 27,455.

2. Verfahren zur Herstellung des Farbstoffes nach Anspruch 1, **dadurch gekennzeichnet, dass** Phthalsäureanhydrid und 1,8-Diaminonaphthalin in einem organischen Lösungsmittel in Gegenwart von Trimellithsäure oder deren Derivaten bei einer Temperatur von 90 bis 200°C umgesetzt werden.

3. Verfahren nach Anspruch 2, **dadurch gekennzeichnet, dass** als organisches Lösungsmittel N-Methylpyrrolidon verwendet wird.

4. Verfahren nach Anspruch 2, **dadurch gekennzeichnet, dass** die Reaktion zusätzlich in Gegenwart von Toluolsulfonsäure erfolgt.

5. Verfahren zur Herstellung des Farbstoffes nach Anspruch 1, **dadurch gekennzeichnet, dass** man den Farbstoff der Formel (I) in der α-Modifikation, die im Röntgenbeugungsdiagramm (Cu-K_{α}-Strahlung) Linien bei folgenden Beugungswinkeln 26 (°) aufweist:
9,911; 11,799; 12,412; 13,150; 23,682; 24,122; 24,852; 26,765; 27,476,
in einem organischen Lösungsmittel löst und den Farbstoff der Formel (I) in Gegenwart von Trimellithsäure oder deren Derivaten ausfällt.

6. Wässrige Dispersion enthaltend 30 bis 50 Gew.-% des Farbstoffes gemäß Anspruch 1 und 0,1 bis 5 Gew.-% eines Dispergators, bezogen auf den Trockenfarbstoff gemäß Anspruch 1.

7. Feste Präparationen enthaltend 95 bis 99,9 Gew.-% des Farbstoffes gemäß Anspruch 1 und 0,1 bis 5,0 Gew.-% eines Dispergators, jeweils bezogen auf die Präparation.

8. Verwendung des Farbstoffes gemäß Anspruch 1 oder der Präparation gemäß Anspruch 7 zum Massefärben von Kunststoffen.

## Claims

1. Dye of the formula (I) in the β-form 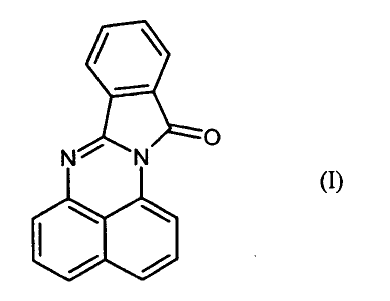 **characterized by** lines at the following diffraction angles 2θ (°):
9.935, 12.734, 13.378, 24.033, 24.852, 27.455
in the X-ray diffraction diagram (Cu-K_{α} radiation).

2. Process for preparing the dye according to Claim 1, **characterized in that** phthalic anhydride and 1,8-diaminonaphthalene are reacted at a temperature of 90 to 200°C in an organic solvent in the presence of trimellitic acid or derivatives thereof.

3. Process according to claim 2, **characterized in that** the organic solvent used is N-methylpyrrolidone.

4. Process according to Claim 2, **characterized in that** the reaction is effected in the additional presence of toluenesulphonic acid.

5. Process for preparing the dye according to Claim 1, **characterized in that** the α-form of the dye of the formula (I), **characterized by** lines at the following diffraction angles 29 (°):
9.911, 11.799, 12.412, 13.150, 23.682, 24.122, 24.852, 26.765, 27.476,
in the X-ray diffraction diagram (Cu-K_{α} radiation),
is dissolved in an organic solvent and the dye of the formula (I) is precipitated in the presence of trimellitic acid or derivatives thereof.

6. Aqueous dispersion containing 30 to 50% by weight of the dye according to Claim 1 and 0.1 to 5% of a dispersant, based on the dry dye according to Claim 1.

7. Solid preparations containing 95 to 99.9% by weight of the dye according to Claim 1 and 0.1 to 5.0% by weight of a dispersant, each percentage being based on the preparation.

8. Use of the dye according to Claim 1 or of the preparation according to Claim 7 for mass coloration of plastics.

## Revendications

1. Colorant de formule (I) sous la modification β 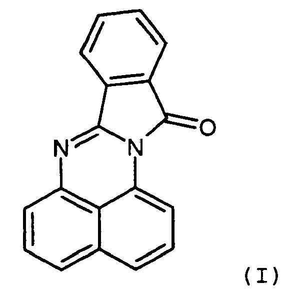 qui présente, dans le diagramme de diffraction des rayons X (rayonnement Cu-K_{α}), des raies à des angles de diffraction 2θ (º) suivants :
9,935 ; 12,734 ; 13,378 ; 24,033 ; 24,852 ; 27,455.

2. Procédé de préparation du colorant selon la revendication 1, **caractérisé en ce que** de l'anhydride phtalique et du 1,8-diaminonaphtalène sont mis à réagir dans un solvant organique en présence d'acide trimellitique ou de ses dérivés à une température de 90 à 200ºC.

3. Procédé selon la revendication 2, **caractérisé en ce que** l'on utilise de la N-méthylpyrrolidone en tant que solvant organique.

4. Procédé selon la revendication 2, **caractérisé en ce que** la réaction est en outre réalisée en présence d'acide toluènesulfonique.

5. Procédé de préparation du colorant selon la revendication 1, **caractérisé en ce que** le colorant de formule (I) sous la modification α, qui présente, dans le diagramme de diffraction des rayons X (rayonnement Cu-K_{α}), des raies à des angles de diffraction 2θ (º) suivants :
9, 911 ; 11,799 ; 12,412 ; 13,150 ; 23,682 ; 24,122 ; 24,852 ; 26,765 ; 27,476,
est dissous dans un solvant organique et le colorant de formule (I) précipite en présence d'acide trimellitique ou de ses dérivés.

6. Dispersion aqueuse contenant de 30 à 50 % en poids du colorant selon la revendication 1 et de 0,1 à 5 % en poids d'un agent dispersant, par rapport au colorant sec selon la revendication 1.

7. Préparations solides contenant de 95 à 99,9 % en poids du colorant selon la revendication 1 et de 0,1 à 5,0 % en poids d'un agent dispersant, dans chaque cas par rapport à la préparation.

8. Utilisation du colorant selon la revendication 1 ou de la préparation selon la revendication 7 pour la coloration en masse de matières synthétiques.
